# EUROPEAN PATENT APPLICATION

(11) **EP 4 748 951 A1**
(43) Date of publication of application: **27.05.2026**
(21) Application number: 24842275.0
(22) Date of filing: 11.07.2024
(51) Int. Cl.: C22B 9/18, C22C 38/02, C22C 38/04, C22C 38/06, C22C 38/18, C22C 38/28, C22C 33/04

(54) **LONG-LIFE BEARING STEEL AND PREPARATION METHOD THEREFOR, AND ELECTROSLAG REMELTING MOLD POWDER**

(30) Priority: 18.07.2023 CN 202310878516
(71) Applicant: BAOSHAN IRON & STEEL CO., LTD., Shanghai 201900 (CN)
(72) Inventor: XU, Yingtie, Shanghai 201900 (CN); LIU, Xiangjiang, Shanghai 201900 (CN); HUANG, Zongze, Shanghai 201900 (CN); LI, Zhiping, Shanghai 201900 (CN); REN, Qingxue, Shanghai 201900 (CN)
(74) Representative: Tergau & Walkenhorst Intellectual Property GmbH
(86) International application number: PCT/CN2024/104977
(87) International publication number: WO 2025/016281

(57) **Abstract**

Disclosed in the present invention are long-life bearing steel, manufacturing method thereof, and mold flux for electroslag remelting. The bearing steel is manufactured through electric furnace or converter smelting, LF refining, vacuum degassing, continuous or ingot casting, electroslag remelting and rolling. A rare earth alloy containing lanthanum and cerium is added to the molten steel before continuous or ingot casting. By adopting a novel mold flux for electroslag remelting, the present invention solves the problem where inclusions and carbide precipitation in bearing steel affect its contact fatigue life , thereby stably improving the contact fatigue life L₁₀ of the bearing steel at 4.5 GPa to 5×10⁷ cycles or more. As a result, the bearing steel can meet the requirements for use in high-end fields such as high-speed railway bearings, aerospace bearings, and wind turbine bearings.

## Description

### TECHNICAL FIELD

The present invention relates to the technical field of steelmaking, and in particular to a long-life bearing steel, a manufacturing method thereof, and a mold flux for electroslag remelting.

### BACKGROUND

Bearings, as core components in advanced manufacturing, are produced in large quantities and are widely applied, playing a critical supporting role in the manufacturing industry. The development trend of bearings is toward higher reliability, longer service life, and better environmental adaptability. The most widely used bearing steel is high-carbon chromium GCr15 bearing steel. Conventional bearing steels generally exhibit a contact fatigue life (L10 value) of less than 10⁷ cycles under 4.5 GPa. Although such steels can meet the relevant fatigue life requirements for conventional automotive or mechanical components, they fail to satisfy the reliability and long-life requirements demanded in fields such as high-speed rail or aerospace. Therefore, there is a need to develop long-life bearing steels to meet these relevant requirements, with a required contact fatigue life (L10 value) exceeding 2 × 10⁷ cycles. The contact fatigue life of bearing steel is primarily affected by two factors: inclusions and carbide precipitation. The development of long-life bearing steel requires solving key issues including the complete harmlessness of inclusions and the extreme refinement of carbides. Among stages, the smelting and casting processes are particularly critical for controlling inclusions and carbide precipitation.

In recent years, studies have shown that rare earth treatment can enhance the fatigue life of bearing steel. However, even when rare earth treatment produces a large number of fine rare earth inclusions smaller than 15 µm, the formation of unavoidable large rare earth inclusions larger than 50 µm that cannot be removed still occurs, which is highly detrimental to the stability of bearing steel.

To address the issue of large rare earth inclusions, prior art has proposed an approach in which electroslag remelting is performed after rare earth treatment.

For example, Chinese patent application No. 201210105658.X discloses a rare earthcontaining bearing steel and a manufacturing method thereof, comprising the following steps: a) weighing each component by percentage by mass; b) vacuum induction melting; c) casting remelting electrode rod; d) electroslag remelting to obtain a steel ingot; e) homogenization heat treatment; f) forging into a rod for bearing processing; g) spheroidizing heat treatment. However, this manufacturing method does not recognize the influence of the rare earth content on the contact fatigue life of bearing steel, nor does it propose a means to stably control the rare earth content so as to ensure that the contact fatigue life meets long-life requirements.

Chinese patent application No. 202210290982 proposes a new rare earth railway carburizing bearing steel material and a manufacturing method thereof. This method suggests controlling the range of the rare earth element Ce and conducting electroslag treatment. However, the slag system used in the electroslag treatment is a conventional electroslag slag system, with the composition of the mold flux for electroslag remelting being: CaF₂: 30%, Al₂O₃: 45%, CaO: 30%, MgO: 5%. When such a slag system is used, rare earth inclusions in the electrode rod react with the steel slag during electroslag treatment process, transforming into alumina inclusions or calcium aluminate Ds inclusions. Meanwhile, it becomes difficult to control the rare earth element content in the steel within the desired range.

In view of the above, there is an urgent need to develop a method for smelting long-life bearing steel. Such method should be based on a comprehensive investigation of the effect of rare earth content on contact fatigue life, while simultaneously considering the influence of rare earth treatment on inclusions and carbide precipitation, thereby enhancing the fatigue life of bearing steel.

### SUMMARY

Aiming at the problem in the prior art where inclusions and carbide precipitation affect the contact fatigue life of bearing steel, the objective according to the present invention is to provide a long-life bearing steel, a manufacturing method thereof, and a mold flux for electroslag remelting, which can stably improve the contact fatigue life L₁₀ value of the bearing steel at 4.5 GPa to 5×10⁷ cycles or more, thereby meeting the requirements for bearing steel used in high-end fields such as high-speed railway bearings, aerospace bearings, and wind turbine bearings.

To achieve the above objective, the present invention adopts the following technical solutions:
The first aspect according to the present invention provides a method for manufacturing bearing steel, comprising the following steps:
S1: subjecting molten steel sequentially to electric furnace or converter smelting, LF refining, vacuum degassing, and continuous or ingot casting to obtain an ingot, wherein a rare earth alloy containing lanthanum and cerium is added to the molten steel prior to the continuous or ingot casting;
S2: cleaning a surface of the ingot and processing the ingot into an electrode rod for electroslag remelting;
S3: using the electrode rod as a raw material and performing electroslag remelting in an electroslag furnace to obtain an electroslag ingot, wherein a mold flux comprising the following components in percentage by mass is used during the electroslag remelting process: CaF₂: 40-65%, Al₂O₃: 5-10%, ZrO₂: 10-15%, CaO: 5-10%, MgO: 2-5%, SiO₂: 3-5%, Ce₂O₃+La₂O₃: 10-15%;
S4: subjecting the electroslag ingot to diffusing in a soaking furnace at 1200-1250°C and then rolling it into bearing steel.

Preferably, the mold flux in step S3 consists of the following components in percentage by mass: CaF₂: 40-65%, Al₂O₃: 5-10%, ZrO₂: 10-15%, CaO: 5-10%, MgO: 2-5%, SiO₂: 3-5%, Ce₂O₃+La₂O₃: 10-15%.

Preferably, in step S1, the rare earth alloy containing lanthanum and cerium is added by a feeding method, wherein prior to feeding the rare earth alloy, argon gas is blown into the bottom of a ladle containing the molten steel to blow away a slag layer and expose the molten steel, and the rare earth alloy is then fed into the molten steel; after feeding the rare earth alloy, mass percentages of rare earth elements in the molten steel are controlled to: Ce: 0.006-0.011%, La: 0.003-0.006%.

Preferably, the rare earth alloy is added such that a recovery rate of rare earth elements in a final finished bearing steel is 50-60%.

Preferably, in step S1, when continuous casting is adopted, a superheat of the molten steel is controlled to 30-40°C, while flow control is performed using a stopper in a casting crystallizer, and argon gas is blown into the stopper at a flow rate of 2-5 NL/min.

Preferably, in step S1, the ingot has a mass of 1.5-3 tons; when the ingot is a square billet, the ingot has a side length of 0.33-0.38 m and a length of 2-4 m; and when the ingot is a round ingot, the ingot has a diameter of 0.35-0.4 m and a length of 2-3 m.

Preferably, in step S3, the electroslag remelting smelting process is carried out under a protective atmosphere and at a constant melting rate, wherein a melting rate of the electrode rod during the electroslag remelting smelting process is 5-8 kg/min.

Preferably, in step S3, an addition amount of the mold flux is 40-60 kg/tₛₜₑₑₗ.

Preferably, the bearing steel comprises the following chemical components in percentage by mass: C: 0.90-1.1%, Cr: 1.4-1.6%, Mn: 0.30-0.60%, Si: 0.20-0.30%, Al: 0.008-0.030%, Ce: 0.004-0.010%, La: 0.002-0.006%, Ti<0.0015%, N<0.005%, S<0.010%, P<0.015%, with the balance being Fe and other inevitable impurities.

Preferably, the bearing steel comprises inclusions, wherein 95% or more of the inclusions are fine inclusions having a rare earth oxide content exceeding 60% and a size of less than 10 µm, and a remainder are composite inclusions of rare earth oxide-alumina-calcia-silica, wherein the composite inclusions have a size of less than 15 µm.

Preferably, the bearing steel has a contact fatigue life L₁₀ at 4.5 GPa of 5×10⁷ cycles or more.

A second aspect according to the present invention provides a bearing steel manufactured by the aforementioned manufacturing method, comprising the following chemical components in percentage by mass: C: 0.9-1.1%, Cr: 1.4-1.6%, Mn: 0.3-0.6%, Si: 0.2-0.3%, Al: 0.008-0.03%, Ce: 0.004-0.01%, La: 0.002-0.006%, Ti<0.0015%, N<0.005%, S<0.01%, P<0.015%, with the balance being Fe and other inevitable impurities.

A third aspect according to the present invention provides a mold flux for electroslag remelting used in the aforementioned manufacturing method, comprising the following components in percentage by mass: CaF₂: 40-65%, Al₂O₃: 5-10%, ZrO₂: 10-15%, CaO: 5-10%, MgO: 2-5%, SiO₂: 3-5%, Ce₂O₃+La₂O₃: 10-15%.

Preferably, the aforementioned mold flux consists of the following components in percentage by mass: CaF₂: 40-65%, Al₂O₃: 5-10%, ZrO₂: 10-15%, CaO: 5-10%, MgO: 2-5%, SiO₂: 3-5%, Ce₂O₃+La₂O₃: 10-15%.

Unless otherwise specified, the contents of components such as those of molten steel, steel ingots, and mold flux described in the present invention are all expressed in percentage by mass.

The present invention provides the following beneficial effects:
The contact fatigue life L₁₀ value (i.e., the contact fatigue life corresponding to a failure probability of less than 10%) of the bearing steel according to the present invention under 4.5 GPa is stably 5×10⁷ cycles or more, far exceeding that of conventional high-carbon chromium bearing steel GCr15. The steel can be widely applied in high-end fields such as high-speed railway bearings, aerospace bearings, and wind turbine bearings. Moreover, the long-life bearing steel manufactured by the present invention can replace carburized bearing steel with higher manufacturing costs in industrial applications.

### DETAILED DESCRIPTION

To better understand the technical solution according to the present invention described above, the technical solution according to the present invention is further explained below with reference to examples.

The present invention provides a method for manufacturing long-life bearing steel. The process involves electric furnace (or converter) smelting, LF refining, VD (or RH) vacuum degassing, continuous (or mold) casting, electroslag remelting and rolling. The key to this process design lies in the stable control of the rare earth element content and the size of rare earth inclusions during manufacturing process. This ensures the complete elimination of the detrimental effects caused by inclusions. Furthermore, the rare earth elements are utilized to suppress carbide precipitation at grain boundaries without compromising the performance of the bearing steel, thereby significantly enhancing the service life of the bearing steel. The contact fatigue life of the resulting high-carbon chromium bearing steel exceeds that of conventional carburized bearing steel, allowing it to replace the more costly carburized bearing steel in industrial applications.

In the embodiments according to the present invention, the method for manufacturing bearing steel comprising the following steps:
S1: subjecting molten steel sequentially to electric furnace or converter smelting, LF refining, vacuum degassing, and continuous or ingot casting to obtain an ingot, wherein a rare earth alloy containing lanthanum and cerium is added to the molten steel prior to the continuous or ingot casting.

Specifically, electric furnace or converter smelting, LF refining, VD (or RH) vacuum degassing, and continuous casting of large square billets (or round billets) or ingot casting) for the large-scale manufacturing process is selected to manufacture square or round ingots. Prior to continuous/ingot casting, a rare earth alloy containing lanthanum and cerium is added to the molten steel. The manufactured ingot has a mass of 1.5-3 tons. When the final ingot is a square billet, the ingot has a side length of 0.33-0.38 m and a length of 2-4 m. When the final ingot is a round ingot, the ingot has a diameter of 0.35-0.4 m and a length of 2-3 m. The above shape designs of the ingot are selected to meet the dimensional requirements of the subsequent electroslag electrode rods.

In the aforementioned large-scale manufacturing process, the capacity of the electric furnace or converter is 60-150 t. If the ingot dimensions of the square or round billets exceed the ranges described above, round rolled billets can be manufactured through primary rolling and blooming for use as an electrode rod in electroslag remelting, with a diameter of 0.35-0.4 m and a length of 2-3 m. During the smelting process, the capacity of the electric furnace or converter is 60-150 t, ensuring that the subsequent manufacture of electrode rods for electroslag remelting can proceed smoothly. If the capacity of the primary smelting furnace is too low, the manufacturing cost of the bearing steel will increase. If the capacity of the primary smelting furnace is too high, it will be difficult to maintain stable casting during the continuous casting process. Moreover, considering that the shape of the ingot from continuous casting or ingot casting may not necessarily meet the size requirements for the electrode rod, the desired electrode rod sizes can be achieved during the primary rolling and blooming process.

The large-scale manufacturing process is selected to manufacture the electrode rods required for subsequent electroslag remelting. This approach is similar to conventional processes for manufacturing bearing steel, with the aim of reducing manufacturing costs. Unlike bearing steel manufactured by the conventional manufacturing processes, a rare earth alloy is added prior to casting to provide rare earth elements for the stable control of the rare earth composition in the final long-life bearing steel material. The rare earth alloy containing lanthanum and cerium is added using a feeding method. Before feeding the rare earth alloy, argon gas is blown into the bottom of the ladle containing the molten steel to blow away the slag layer and expose the molten steel, and the rare earth alloy is then fed into the molten steel. The rare earth alloy is added such that a recovery rate of the rare earth elements in the final finished bearing steel is 50-60%. After adding the rare earth alloy to the molten steel, its content in the molten steel is controlled to Ce: 0.006-0.011%, La: 0.003-0.006%. Using the feeding method to add the rare earth alloy results in a high recovery rate, facilitates convenient operation, and ensures that the final form of the rare earth elements in the bearing steel is controllable. After adding the rare earth alloy to the molten steel, the content of rare earth elements in the molten steel must be controlled to Ce: 0.006-0.011%, La: 0.003-0.006%. This content is slightly higher than the required rare earth content in the steel after the final electroslag remelting, mainly to compensate for minor losses of rare earth elements during the electroslag remelting process.

When continuous casting is used to produce ingots, the superheat of the molten steel is controlled to 30-40°C, while flow control is performed in a casting crystallizer using a stopper, and argon gas is blown into the stopper to prevent nozzle clogging during casting. The superheat of 30-40°C is selected primarily because the castability of the molten steel slightly decreases after the addition of rare earth elements; therefore, a moderately higher superheat is set. Meanwhile, argon is blown into the casting nozzle in the mold to avoid nozzle clogging. Since step S1 is only intended for manufacturing electrode rods for subsequent electroslag remelting, issues such as segregation caused by high superheat and gas bubbles introduced by argon blowing, which are concerns in conventional bearing steel billet manufacturing processes, do not occur in the present invention, as these issues are resolved during the subsequent electroslag remelting process.

The method for manufacturing the bearing steel according to the present invention further includes the following steps after step S1:
S2: cleaning a surface of the ingot and processing the ingot into an electrode rod for electroslag remelting;
S3: using the electrode rod as a raw material and performing electroslag remelting in an electroslag furnace to obtain an electroslag ingot, wherein a mold flux comprising the following components in percentage by mass is used during the electroslag remelting process: CaF₂: 40-65%, Al₂O₃: 5-10%, ZrO₂: 10-15%, CaO: 5-10%, MgO: 2-5%, SiO₂: 3-5%, Ce₂O₃+La₂O₃: 10-15%.

The addition amount of the aforementioned mold flux is 40-60 kg/tₛₜₑₑₗ, wherein tₛₜₑₑₗ refers to the mass of steel in tons. The electroslag ingot obtained by electroslag remelting is a cylindrical electroslag ingot with a diameter of 0.4-0.6 m.

Electroslag remelting treatment is a crucial step in manufacturing long-life bearing steel. This is mainly because bearing steel manufactured via large-scale manufacturing processes inevitably contains a significant number of inclusions with particle sizes larger than 15 µm. In particular, after rare earth treatment in step S1, the resulting highdensity rare earth inclusions form large-sized rare earth inclusions, which inevitably reduce the contact fatigue life. Therefore, for rare earth-treated bearing steel, electroslag remelting treatment is essential to stably improve its contact fatigue life.

During the electroslag remelting process, the electrode rod, slag, and molten steel in the mold form an electrical circuit. Under low-voltage and high-current conditions, localized heating of the slag causes the tip of the electrode rod in contact with the slag to gradually melt into droplets. A large number of separated droplets pass through the slag layer and fall into the molten steel pool in the mold, where the steel in contact with the mold solidifies again, thereby purifying the molten steel. Electroslag remelting filters the molten steel through the mold flux, effectively removing large inclusions.

The present invention employs a novel mold flux system for electroslag remelting, which not only removes large inclusions from the molten steel but also stably controls the contents of rare earth elements in the final bearing steel. Neither excessively high nor excessively low rare earth element content in the bearing steel can enhance its contact fatigue life and bending fatigue life. The inventors have found that when the content of rare earth elements Ce and La in the bearing steel meets the following: Ce: 0.004-0.010% and La: 0.002-0.006%, a significant improvement in contact fatigue life can be ensured. This is because, in addition to reducing the detrimental effects caused by inclusions and enhancing the contact fatigue life of the bearing steel, rare earth elements can also restrict carbon diffusion in the steel and suppress carbide precipitation at grain boundaries. However, if the rare earth element content is too high, due to the large atomic size of rare earth elements, it can affect the overall plasticity of the bearing steel, thereby reducing its contact fatigue life. If the rare earth element content is too low, rare earth oxide inclusions cannot form in the steel, instead, conventional aluminum-calcium oxide inclusions are generated. These aluminum-calcium oxide inclusions are highly detrimental and degrade the contact fatigue life of the bearing steel. Therefore, it is essential to control the rare earth element content within the aforementioned range during the electroslag remelting process. Since rare earth elements are reactive, they tend to react with the mold flux during electroslag remelting process, leading to loss of rare earth elements.

The inventors have discovered that using the following mold flux system for electroslag remelting: CaF₂: 40-65%, Al₂O₃: 5-10%, ZrO₂: 10-15%, CaO: 5-10%, MgO: 2-5%, SiO₂: 3-5%, Ce₂O₃+La₂O₃: 10-15%, can ensure stable control of the rare earth element content within the desired range during the electroslag remelting process. Also, after electroslag remelting, rare earth element inclusions are largely refined into fine rare earth oxide inclusions, which are harmless and, as nucleation sites, improve the solidification structure of the bearing steel.

In the mold flux system according to the present invention, ZrO₂ is selected primarily due to its strong neutral characteristic, which makes it less likely to react with rare earth elements. Unlike MgO and CaO, ZrO₂ is less prone to moisture absorption, allowing for effective adjustment of the properties of the electroslag. Meanwhile, the contents of both MgO and CaO are controlled at relatively low levels to prevent the slag from absorbing moisture and to avoid hydrogen-induced cracks in the bearing steel. Compared to conventional electroslag slag systems for bearing steel, the Al₂O₃ content in the mold flux system designed in the present invention is significantly reduced. This is mainly intended to avoid the formation of excessive amounts of brittle Al₂O₃ inclusions during the electroslag remelting process, as brittle Al₂O₃ inclusions are hard and can significantly impact the contact fatigue life of the bearing steel.

During the aforementioned electroslag remelting process, argon must be blown into the mold for 20 minutes or more before energization to displace the residual air inside the mold. The electroslag remelting process must be conducted under a protective atmosphere (e.g., pure argon gas), employing electroslag remelting smelting with a constant melting rate. During electroslag remelting, the melting rate of the electrode rod is controlled at 5-8 kg/min. After the electroslag remelting is completed and power is turned off, argon blowing must be maintained for at least 15 minutes to prevent secondary oxidation of the ingot. Conducting electroslag remelting under a protective atmosphere primarily aims to prevent secondary oxidation of the ingot; without a protective atmosphere, significant losses of silicon, carbon, and rare earth elements from the molten steel due to oxidation can easily occur. Controlling the melting rate during the electroslag remelting process ensures stable control of the final electroslag ingot's microstructure.

Unless otherwise specified, the protective atmosphere in the present invention refers to pure argon gas, with an Ar volume fraction of 99.6% or more.

The electroslag ingot obtained from electroslag remelting is required to have a round ingot diameter of 0.4-0.6 m, primarily to meet the dimensional requirements for subsequent primary rolling and blooming, as well as the high-temperature diffusion process in the soaking furnace.

The method for manufacturing the bearing steel according to the present invention further includes the following step after step S3:
S4: subjecting the electroslag ingot to diffusing in a soaking furnace at 1200-1250°C and then rolling it into bearing steel.

The purpose of selecting high-temperature diffusion of the electroslag ingot in the soaking furnace is to further reduce the carbide size, thereby enhancing the contact fatigue life. The high-temperature diffusion temperature in the soaking furnace is 1200-1250°C.

The aforementioned bearing steel comprises the following chemical components in percentage by mass: C: 0.90-1.1%, Cr: 1.4-1.6%, Mn: 0.30-0.60%, Si: 0.20-0.30%, Al: 0.008-0.030%, Ce: 0.004-0.010%, La: 0.002-0.006%, Ti<0.0015%, N<0.005%, S<0.010%, P<0.015%, with the balance being Fe and other inevitable impurities.

As mentioned above, controlling the rare earth element content to Ce: 0.004-0.010% and La: 0.002-0.006% can significantly enhance the contact fatigue life of bearing steel. The use of a suitable mold flux for electroslag remelting during the electrode rod manufacturing and electroslag remelting process ensures stable control of the rare earth element content in the final bearing steel within the above range. Neither excessively high nor excessively low rare earth element content can improve the contact fatigue life or bending fatigue life of the bearing steel. The content ranges of other elements in the bearing steel are similar to those of conventional bearing steel.

In the aforementioned bearing steel, 95% or more of the inclusions are fine inclusions having a rare earth oxide content exceeding 60% and a size of less than 10 µm. The remainder are composite inclusions of rare earth oxide-alumina-calcia-silica, wherein the composite inclusions have a size of less than 15 µm. In the present invention. Inclusion sizes are determined by automatic analysis of SEM images of the steel crosssection using the AZtecFeature particle analysis system dedicated to SEM from Oxford Instruments.

In the aforementioned manufacturing method, for the control of inclusions in the bearing steel, in addition to controlling their size, the composition of the inclusions must also be regulated. Through the process controls described above, most of the final inclusions are harmless fine particles of rare earth oxide inclusions. The rare earth oxide inclusions deform in a manner largely consistent with the steel matrix during subsequent rolling processes, making them essentially harmless. Moreover, the inclusion control process described above also reduces the amount of conventional alumina-calcia-silica inclusions, thereby enabling the bearing steel to achieve a long service life.

The aforementioned bearing steel has a stable contact fatigue life L₁₀ (the contact fatigue life corresponding to a failure probability of less than 10%) under 4.5 GPa of 5×10⁷ cycles or more, far exceeding that of conventional high-carbon chromium bearing steel. It can be widely applied in high-end fields such as high-speed railway bearings, aerospace bearings, and wind turbine bearings. In the present invention, the contact fatigue life is measured using a contact fatigue testing machine (TRF-1000) from Tokyo Testing Machine Inc., Japan.

The bearing steel, the manufacturing method thereof, and the mold flux for electroslag remelting according to the present invention are further described below with reference to specific examples.

### Example 1

This example adopted a process of 150 t electric furnace smelting, LF, VD vacuum degassing, large square billet continuous casting, electroslag remelting, rolling, which mainly comprises the following steps:
1) The molten steel was sequentially processed through 150 t electric furnace smelting, LF refining, VD vacuum degassing. The molten steel was smelted and refined according to conventional bearing steel manufacturing methods. After the VD vacuum degassing treatment, the composition of the molten steel was: [C]: 0.98%, [Cr]: 1.48%, [Mn]: 0.41%, [Si]: 0.25%, [Al]: 0.015%, [Ti]: 0.0011%, [N]: 0.0045%, [S]: 0.0045%, [P]: 0.013%, with the balance being Fe and other inevitable impurities. The above composition meets the conventional standard for bearing steel GCr15. After the composition was tested to be qualified, the flow rate of the argon blowing into the bottom of the ladle was increased to 300-500 NL/min to ensure that the slag layer is blown open. 15 kg of a rare earth alloy containing La and Ce was manually added (based on a recovery rate of 55%). Subsequently, the bottom-blown flow rate was slightly reduced to 100-200 NL/min to allow the slag layer to close, followed by a slightly higher blow (300-500 NL/min) for stirring for 2 minutes. After that, the bottom-blown argon flow rate was adjusted to the normal weak stirring requirement of 50-100 NL/min. The content of rare earth elements in the molten steel was then measured to be [Ce]: 0.0065% and [La]: 0.0034%. After soft blowing and stirring treatment in the ladle, the molten steel was transferred to the continuous casting process and cast into square billet with a side length of 0.35 m, which were then cut into square ingots with a length of 3.8 m. During the continuous casting process, the superheat of the molten steel was controlled at 35°C. Flow control was achieved using a stopper, and argon was blown into the stopper to prevent nozzle clogging during casting, with an argon flow rate of 2 NL/min. Since the continuous casting process allows for the sequential casting of multiple furnace steel, the cast billets from one of these furnace steel can be selected and cut into ingots for subsequent electroslag, with multiple ingots producible from a single furnace steel.
2) The surface of the square ingot obtained in step 1 was cleaned by grinding off the iron oxide scale on the ingot's outer layer to manufacture an electrode rod suitable for electroslag smelting.
3) Using the electrode rod as the raw material, it was loaded into an electroslag furnace for electroslag remelting smelting. The electroslag furnace performed electroslag remelting under an Ar gas protective atmosphere. Before energizing the electroslag process, argon was pre-blowing into the mold for 20 minutes or more to displace the residual air inside the mold. A mold with a diameter of 0.6 m was selected, and the composition of the mold flux for electroslag remelting used was: CaF₂: 45%, Al₂O₃: 8%, ZrO₂: 15%, CaO: 8%, MgO: 5%, SiO₂: 4%, Ce₂O₃+La₂O₃: 15%. The total addition amount of the mold flux for electroslag remelting was 160 kg. Subsequently, the power was switched on to initiate the electroslag remelting treatment. An electroslag ingot with a diameter of 0.6 m and a length of 1.6 m was manufactured. The entire electroslag remelting process must be conducted under a protective atmosphere. Electroslag remelting smelting was conducted at a constant melting rate, with the melting rate of the electrode rod controlled at 6 kg/min during the electroslag remelting. After the electroslag power was shut off and an electroslag ingot was obtained, argon blowing protection was maintained for 15 minutes to prevent secondary oxidation of the ingot.
4) The electroslag ingot was transferred to a soaking furnace at 1220°C for high-temperature diffusion lasting 16 hours. Subsequently, it underwent primary rolling into a square billet with a side length of 140 mm, and was then finish-rolled into bearing steel with a diameter specification of 60 mm or less according to user requirements. Its composition was: [C]: 0.97%, [Cr]: 1.45%, [Mn]: 0.40%, [Si]: 0.24%, [Al]: 0.014%, [Ce]: 0.005%, [La]: 0.0032%, [Ti]: 0.0012%, [N]: 0.0048%, [S]: 0.003%, [P]: 0.012%, with the balance being Fe and other inevitable impurities. The inclusions in the steel were automatically scanned, detected, and analyzed using an SEM electron microscope combined with the AZtecFeature system of an Oxford energy-dispersive spectrometer. 98% of the inclusions were fine inclusions with a rare earth oxide content exceeding 60%, all of which had sizes smaller than 10 µm. 2% were composite inclusions of rare earth oxide-alumina-calcia-silica, with sizes smaller than 15 µm. At the same time, the contact fatigue life of the bearing steel under 4.5 GPa was tested. A total of 12 samples were tested, and the L₁₀ value was determined to be 5.7×10⁷ cycles.

The manufactured bearing steel exhibits stable performance and long contact fatigue life, making it suitable for high-end fields such as high-speed railway bearings, aerospace bearings, and wind turbine bearings.

### Example 2

This example adopted a process of 150 t converter smelting, LF refining, RH vacuum degassing, round billet continuous casting, electroslag remelting, rolling, which comprises the following steps:
1) The molten steel was sequentially processed through 150 t converter smelting, LF refining, RH vacuum degassing. The molten steel was smelted and refined according to conventional bearing steel manufacturing methods. After the RH vacuum degassing treatment, the composition of the molten steel was: [C]: 1.05%, [Cr]: 1.58%, [Mn]: 0.59%, [Si]: 0.28%, [Al]: 0.029%, [Ti]: 0.0014%, [N]: 0.0035%, [S]: 0.0065%, [P]: 0.014%, with the balance being Fe and other inevitable impurities. The above composition meets the conventional standard for bearing steel GCrl5. After the composition was tested to be qualified, the flow rate of the argon blowing into the bottom of the ladle was increased to 300-500 NL/min to ensure that the slag layer is blown open. 15 kg of a rare earth alloy containing La and Ce was manually added (based on a recovery rate of 55%). Subsequently, the bottom-blown flow rate was slightly reduced to 100-200 NL/min to allow the slag layer to close, followed by a slightly higher blow (300-500 NL/min) for stirring for 2 minutes. After that, the bottom-blown argon flow rate was adjusted to the normal weak stirring requirement of 50-100 NL/min. The content of rare earth elements in the molten steel was then measured to be [Ce]: 0.009% and [La]: 0.0045%. After soft blowing and stirring treatment in the ladle, the molten steel was transferred to the continuous casting process and cast into round billet with a diameter of 0.38 m, which were then cut into round ingots with a length of 2.9 m. During the continuous casting process, the superheat of the molten steel was controlled at 39°C. Flow control was achieved using a stopper, and argon was blown into the stopper to prevent nozzle clogging during casting, with an argon flow rate of 3 NL/min. Since the continuous casting process allows for the sequential casting of multiple furnace steel, the cast billets from one of these furnace steel can be selected and cut into ingots for subsequent electroslag, with multiple ingots producible from a single furnace steel.
2) The surface of the round ingot obtained in step 1 was cleaned by grinding off the iron oxide scale on the ingot's outer layer to manufacture an electrode rod suitable for electroslag smelting.
3) Using the electrode rod as the raw material, it was loaded into an electroslag furnace for electroslag remelting smelting. The electroslag furnace performed electroslag remelting under an Ar gas protective atmosphere. Before energizing the electroslag process, argon was pre-blowing into the mold for 25 minutes or more to displace the residual air inside the mold. A mold with a diameter of 0.48 m was selected, and the composition of the mold flux for electroslag remelting used was: CaF₂: 64%, Al₂O₃: 5%, ZrO₂: 10%, CaO: 5%, MgO: 3%, SiO₂: 3%, Ce₂O₃+La₂O₃: 10%. The total addition amount of the remelting mold flux was 100 kg. Subsequently, the power was switched on to initiate the electroslag remelting treatment. An electroslag ingot with a diameter of 0.48 m and a length of 1.9 m was manufactured. The entire electroslag remelting process must be conducted under a protective atmosphere. Electroslag remelting smelting was conducted at a constant melting rate, with the melting rate controlled at 5 kg/min during the electroslag remelting. After the electroslag power was shut off and an electroslag ingot was obtained, argon blowing protection was maintained for 20 minutes to prevent secondary oxidation of the ingot.
4) The electroslag ingot was transferred to a soaking furnace at 1200°C for high-temperature diffusion lasting 14 hours. Subsequently, it underwent primary rolling into a square billet with a side length of 140 mm, and was then finish-rolled into bearing steel with a diameter specification of 60 mm or less according to user requirements.

The composition of the final bearing steel was: [C]: 1.01%, [Cr]: 1.53%, [Mn]: 0.56%, [Si]: 0.25%, [Al]: 0.023%, [Ce]: 0.006%, [La]: 0.004%, [Ti]: 0.0009%, [N]: 0.0038%, [S]: 0.007%, [P]: 0.012%, with the balance being Fe and other inevitable impurities. The inclusions in the steel were automatically scanned, detected, and analyzed using an SEM electron microscope combined with the AZtecFeature system of an Oxford energy-dispersive spectrometer. 99% of the inclusions were fine inclusions with a rare earth oxide content exceeding 60%, all of which had sizes smaller than 10 µm. 1% were composite inclusions of rare earth oxide-alumina-calcia-silica, with sizes smaller than 15 µm. At the same time, the contact fatigue life of the bearing steel under 4.5 GPa was tested. A total of 12 samples were tested, and the L₁₀ value was determined to be 5.2×10⁷ cycles.

The manufactured bearing steel exhibits stable performance and long contact fatigue life, making it suitable for high-end fields such as high-speed railway bearings, aerospace bearings, and wind turbine bearings.

### Example 3

This example adopted a process of 150 t electric furnace smelting, LF, RH vacuum degassing, ingot casting, primary rolling and blooming, electroslag remelting, rolling, which comprises the following steps:
1) The molten steel was sequentially processed through 150 t electric furnace smelting, LF refining, RH vacuum degassing. The molten steel was smelted and refined according to conventional bearing steel manufacturing methods. After the RH vacuum degassing treatment, the composition of the molten steel was: [C]: 0.98%, [Cr]: 1.42%, [Mn]: 0.38%, [Si]: 0.25%, [Al]: 0.01%, [Ti]: 0.001%, [N]: 0.0045%, [S]: 0.0055%, [P]: 0.013%, with the balance being Fe and other inevitable impurities. The above composition meets the conventional standard for bearing steel GCrl5. After the composition was tested to be qualified, the flow rate of the argon blowing into the bottom of the ladle was increased to 300-500 NL/min to ensure that the slag layer is blown open. 15 kg of a rare earth alloy containing La and Ce was manually added (based on a recovery rate of 55%). Subsequently, the bottom-blown flow rate was slightly reduced to 100-200 NL/min to allow the slag layer to close, followed by a slightly higher blow (300-500 NL/min) for stirring for 2 minutes. After that, the bottom-blown argon flow rate was adjusted to the normal weak stirring requirement of 50-100 NL/min. The content of rare earth elements in the molten steel was then measured to be [Ce]: 0.010% and [La]: 0.005%. After soft blowing and stirring treatment in the ladle, the molten steel was transferred for ingot casting and poured into a round ingot with a diameter of 0.6 m and weighing 6 tons.
2) The above round ingot was processed through primary rolling and blooming, rolled and cut into a round ingot with a diameter of 0.34 m and a length of 3.5 m.
3) The surface of the round ingot obtained in step 2 was cleaned by grinding off the iron oxide scale on the ingot's outer layer to manufacture an electrode rod suitable for electroslag smelting.
4) Using the electrode rod as the raw material, it was loaded into an electroslag furnace for electroslag remelting smelting. The electroslag furnace performed electroslag remelting under an Ar gas protective atmosphere. Before energizing the electroslag process, argon was pre-blowing into the mold for 15 minutes or more to displace the residual air inside the mold. A mold with a diameter of 0.42 m was selected, and the composition of the mold flux for electroslag remelting used was: CaF₂: 45%, Al₂O₃: 9%, ZrO₂: 14%, CaO: 9%, MgO: 5%, SiO₂: 5%, Ce₂O₃+La₂O₃: 13%. The total addition amount of the mold flux for electroslag remelting was 94 kg. Subsequently, the power was switched on to initiate the electroslag treatment. An electroslag ingot with a diameter of 0.42 m and a length of 2.2 m was manufactured. The entire electroslag remelting process must be conducted under a protective atmosphere. Electroslag remelting smelting was conducted at a constant melting rate, with the melting rate controlled at 4.5 kg/min during the electroslag remelting. After the electroslag power was shut off and an electroslag ingot was obtained, argon blowing protection was maintained for 20 minutes to prevent secondary oxidation of the ingot.
5) The electroslag ingot was transferred to a soaking furnace at 1200°C for high-temperature diffusion lasting 14 hours. Subsequently, it underwent primary rolling into a square billet with a side length of 140 mm, and was then finish-rolled into bearing steel with a diameter specification of 60 mm or less according to user requirements. The composition of the final bearing steel was: [C]: 1.01%, [Cr]: 1.53%, [Mn]: 0.56%, [Si]: 0.25%, [Al]: 0.023%, [Ce]: 0.006%, [La]: 0.004%, [Ti]: 0.0009%, [N]: 0.0038%, [S]: 0.007%, [P]: 0.012%, with the balance being Fe and other inevitable impurities.

The inclusions in the steel were automatically scanned, detected, and analyzed using an SEM electron microscope combined with the AZtecFeature system of an Oxford energy-dispersive spectrometer. 99% of the inclusions were fine inclusions with a rare earth oxide content exceeding 60%, all of which had sizes smaller than 10 µm. 1% were composite inclusions of rare earth oxide-alumina-calcia-silica, with sizes smaller than 15 µm. At the same time, the contact fatigue life of the bearing steel under 4.5 GPa was tested. A total of 12 samples were tested, and the L₁₀ value was determined to be 5.8×10⁷ cycles.

The manufactured bearing steel exhibits stable performance and long contact fatigue life, making it suitable for high-end fields such as high-speed railway bearings, aerospace bearings, and wind turbine bearings.

### Example 4

This example adopted a process of 150 t converter smelting, LF refining, RH vacuum degassing, round billet continuous casting, electroslag remelting, rolling, which comprises the following steps:
1) The molten steel was sequentially processed through 150 t converter smelting, LF refining, RH vacuum degassing. The molten steel was smelted and refined according to conventional bearing steel manufacturing methods. After the RH vacuum degassing treatment, the composition of the molten steel was: [C]: 1.05%, [Cr]: 1.58%, [Mn]: 0.59%, [Si]: 0.28%, [Al]: 0.029%, [Ti]: 0.0014%, [N]: 0.0035%, [S]: 0.0065%, [P]: 0.014%, with the balance being Fe and other inevitable impurities. The above composition meets the conventional standard for bearing steel GCr15. After the composition was tested to be qualified, the flow rate of the argon blowing into the bottom of the ladle was increased to 300-500 NL/min to ensure that the slag layer is blown open. 15 kg of a rare earth alloy containing La and Ce was manually added (based on a recovery rate of 55%). Subsequently, the bottom-blown flow rate was slightly reduced to 100-200 NL/min to allow the slag layer to close, followed by a slightly higher blow (300-500 NL/min) for stirring for 2 minutes. After that, the bottom-blown argon flow rate was adjusted to the normal weak stirring requirement of 50-100 NL/min. The content of rare earth elements in the molten steel was then measured to be [Ce]: 0.009% and [La]: 0.0045%. After soft blowing and stirring treatment in the ladle, the molten steel was transferred to the continuous casting process and cast into round billet with a diameter of 0.38 m, which were then cut into round ingots with a length of 2.9 m.
   During the continuous casting process, the superheat of the molten steel was controlled at 39°C. Flow control was achieved using a stopper, and argon was blown into the stopper to prevent nozzle clogging during casting, with an argon flow rate of 3 NL/min. Since the continuous casting process allows for the sequential casting of multiple furnace steel, the cast billets from one of these furnace steel can be selected and cut into ingots for subsequent electroslag, with multiple ingots producible from a single furnace steel.
2) The surface of the round ingot was cleaned by grinding off the iron oxide scale on the ingot's outer layer to manufacture an electrode rod suitable for electroslag smelting.
3) Using the electrode rod as the raw material, it was loaded into an electroslag furnace for electroslag remelting smelting. The electroslag furnace performed electroslag remelting under an Ar gas protective atmosphere. Before energizing the electroslag process, argon was pre-blowing into the mold for 25 minutes or more to displace the residual air inside the mold. A mold with a diameter of 0.48 m was selected, and the composition of the mold flux for electroslag remelting used was: CaF₂: 40%, Al₂O₃: 10%, ZrO₂: 15%, CaO: 10%, MgO: 5%, SiO₂: 5%, Ce₂O₃+La₂O₃: 15%. The total addition amount of the remelting mold flux was 105 kg. Subsequently, the power was switched on to initiate the electroslag treatment. An electroslag ingot with a diameter of 0.48 m and a length of 1.9 m was manufactured. The entire electroslag remelting process must be conducted under a protective atmosphere. Electroslag remelting smelting was conducted at a constant melting rate, with the melting rate of the electrode rod controlled at 5 kg/min during the electroslag remelting. After the electroslag power was shut off and an electroslag ingot was obtained, argon blowing protection was maintained for 20 minutes to prevent secondary oxidation of the ingot.
4) The electroslag ingot was transferred to a soaking furnace at 1230°C for high-temperature diffusion lasting 14 hours. Subsequently, it underwent primary rolling into a square billet with a side length of 140 mm, and was then finish-rolled into bearing steel with a diameter specification of 60 mm or less according to user requirements. The composition of the final bearing steel was: [C]: 1.01%, [Cr]: 1.53%, [Mn]: 0.56%, [Si]: 0.25%, [Al]: 0.023%, [Ce]: 0.006%, [La]: 0.004%, [Ti]: 0.0009%, [N]: 0.0038%, [S]: 0.007%, [P]: 0.012%, with the balance being Fe and other inevitable impurities. The inclusions in the steel were automatically scanned, detected, and analyzed using an SEM electron microscope combined with the AZtecFeature system of an Oxford energy-dispersive spectrometer. 99% of the inclusions were fine inclusions with a rare earth oxide content exceeding 60%, all of which had sizes smaller than 10 µm. 1% were composite inclusions of rare earth oxide-alumina-calcia-silica, with sizes smaller than 15 µm. At the same time, the contact fatigue life of the bearing steel under 4.5 GPa was tested. A total of 12 samples were tested, and the L₁₀ value was determined to be 5.2×10⁷ cycles.

The manufactured bearing steel exhibits stable performance and long contact fatigue life, making it suitable for high-end fields such as high-speed railway bearings, aerospace bearings, and wind turbine bearings.

### Example 5

This example adopted a process of 150 t electric furnace smelting, LF, RH vacuum degassing, round billet continuous casting, electroslag remelting, rolling, which comprises the following steps:
1) The molten steel was sequentially processed through 150 t electric furnace smelting, LF refining, RH vacuum degassing. The molten steel was smelted and refined according to conventional bearing steel manufacturing methods. After the RH vacuum degassing treatment, the composition of the molten steel was: [C]: 1.05%, [Cr]: 1.58%, [Mn]: 0.59%, [Si]: 0.28%, [Al]: 0.029%, [Ti]: 0.0014%, [N]: 0.0035%, [S]: 0.0065%, [P]: 0.014%, with the balance being Fe and other inevitable impurities. The above composition meets the conventional standard for bearing steel GCr15. After the composition was tested to be qualified, the flow rate of the argon blowing into the bottom of the ladle was increased to 300-500 NL/min to ensure that the slag layer is blown open. 15 kg of a rare earth alloy containing La and Ce was manually added (based on a recovery rate of 55%). Subsequently, the bottom-blown flow rate was slightly reduced to 100-200 NL/min to allow the slag layer to close, followed by a slightly higher blow (300-500 NL/min) for stirring for 2 minutes. After that, the bottom-blown argon flow rate was adjusted to the normal weak stirring requirement of 50-100 NL/min. The content of rare earth elements in the molten steel was then measured to be [Ce]: 0.009% and [La]: 0.0045%. After soft blowing and stirring treatment in the ladle, the molten steel was transferred to the continuous casting process and cast into round billet with a diameter of 0.38 m, which were then cut into round ingots with a length of 2.9 m.
   During the continuous casting process, the superheat of the molten steel was controlled at 39°C. Flow control was achieved using a stopper, and argon was blown into the stopper to prevent nozzle clogging during casting, with an argon flow rate of 3 NL/min. Since the continuous casting process allows for the sequential casting of multiple furnace steel, the cast billets from one of these furnace steel can be selected and cut into ingots for subsequent electroslag, with multiple ingots producible from a single furnace steel.
2) The surface of the round ingot was cleaned by grinding off the iron oxide scale on the ingot's outer layer to manufacture an electrode rod suitable for electroslag smelting.
3) Using the electrode rod as the raw material, it was loaded into an electroslag furnace for electroslag remelting smelting. The electroslag furnace performed electroslag remelting under an Ar gas protective atmosphere. Before energizing the electroslag process, argon was pre-blowing into the mold for 25 minutes or more to displace the residual air inside the mold. A mold with a diameter of 0.48 m was selected, and the composition of the mold flux for electroslag remelting used was: CaF₂: 65%, Al₂O₃: 5%, ZrO₂: 10%, CaO: 5%, MgO: 2%, SiO₂: 3%, Ce₂O₃+La₂O₃: 10%. The total addition amount of the remelting mold flux was 105 kg. Subsequently, the power was switched on to initiate the electroslag remelting treatment. An electroslag ingot with a diameter of 0.48 m and a length of 1.9 m was manufactured. The entire electroslag remelting process must be conducted under a protective atmosphere. Electroslag remelting smelting was conducted at a constant melting rate, with the melting rate controlled at 5 kg/min during the electroslag remelting. After the electroslag power was shut off and an electroslag ingot was obtained, argon blowing protection was maintained for 20 minutes to prevent secondary oxidation of the ingot.
4) The electroslag ingot was transferred to a soaking furnace at 1230°C for high-temperature diffusion lasting 14 hours. Subsequently, it underwent primary rolling into a square billet with a side length of 140 mm, and was then finish-rolled into bearing steel with a diameter specification of 60 mm or less according to user requirements. The composition of the final bearing steel was: [C]: 1.01%, [Cr]: 1.53%, [Mn]: 0.56%, [Si]: 0.25%, [Al]: 0.023%, [Ce]: 0.006%, [La]: 0.004%, [Ti]: 0.0009%, [N]: 0.0038%, [S]: 0.007%, [P]: 0.012%, with the balance being Fe and other inevitable impurities. The inclusions in the steel were automatically scanned, detected, and analyzed using an SEM electron microscope combined with the AZtecFeature system of an Oxford energy-dispersive spectrometer. 99% of the inclusions were fine inclusions with a rare earth oxide content exceeding 60%, all of which had sizes smaller than 10 µm. 1% were composite inclusions of rare earth oxide-alumina-calcia-silica, with sizes smaller than 15 µm. At the same time, the contact fatigue life of the bearing steel under 4.5 GPa was tested. A total of 12 samples were tested, and the L₁₀ value was determined to be 5.2×10⁷ cycles.

The manufactured bearing steel exhibits stable performance and long contact fatigue life, making it suitable for high-end fields such as high-speed railway bearings, aerospace bearings, and wind turbine bearings.

Those skilled in the art would understand that the above embodiments are provided merely to illustrate the present invention and are not intended to limit it. Any modifications or variations made within the spirit of the present invention shall fall within the protection scope of the claims of the present invention.

## Claims

1. A method for manufacturing bearing steel, comprising the following steps:
S1: subjecting molten steel sequentially to electric furnace or converter smelting, LF refining, vacuum degassing, and continuous or ingot casting to obtain an ingot, wherein a rare earth alloy containing lanthanum and cerium is added to the molten steel prior to the continuous or ingot casting;
S2: cleaning a surface of the ingot and processing the ingot into an electrode rod for electroslag remelting;
S3: using the electrode rod as a raw material and performing electroslag remelting in an electroslag furnace to obtain an electroslag ingot, wherein a mold flux comprising the following components in percentage by mass is used during the electroslag remelting process: CaF₂: 40-65%, Al₂O₃: 5-10%, ZrO₂: 10-15%, CaO: 5-10%, MgO: 2-5%, SiO₂: 3-5%, Ce₂O₃+La₂O₃: 10-15%;
S4: subjecting the electroslag ingot to diffusing in a soaking furnace at 1200-1250°C and then rolling it into bearing steel.

2. The method for manufacturing bearing steel according to claim 1, wherein in step S1, the rare earth alloy containing lanthanum and cerium is added by a feeding method, wherein prior to feeding the rare earth alloy, argon gas is blown into the bottom of a ladle containing the molten steel to blow away a slag layer and expose the molten steel, and the rare earth alloy is then fed into the molten steel; after feeding the rare earth alloy, mass percentages of rare earth elements in the molten steel are: Ce: 0.006-0.011%, La: 0.003-0.006%.

3. The method for manufacturing bearing steel according to claim 1, wherein the rare earth alloy is added such that a recovery rate of rare earth elements in a final finished bearing steel is 50-60%.

4. The method for manufacturing bearing steel according to claim 1, wherein in step S1, when continuous casting is adopted, a superheat of the molten steel is controlled to 30-40°C, while flow control is performed using a stopper in a casting crystallizer, and argon gas is blown into the stopper, wherein a flow rate of the argon gas is 2-5 NL/min.

5. The method for manufacturing bearing steel according to claim 1, wherein in step S1, the ingot has a mass of 1.5-3 tons; when the ingot is a square billet, the ingot has a side length of 0.33-0.38 m and a length of 2-4 m; and when the ingot is a round ingot, the ingot has a diameter of 0.35-0.4 m and a length of 2-3 m.

6. The method for manufacturing bearing steel according to claim 1, wherein in step S3, the electroslag remelting smelting process is carried out under a protective atmosphere and at a constant melting rate, wherein a melting rate of the electrode rod during the electroslag remelting smelting process is 5-8 kg/min.

7. The method for manufacturing bearing steel according to claim 1, wherein in step S3, an addition amount of the mold flux is 40-60 kg/tₛₜₑₑₗ, wherein tₛₜₑₑₗ refers to the mass of steel in tons.

8. The method for manufacturing bearing steel according to claim 1, wherein the bearing steel comprises the following chemical components in percentage by mass: C: 0.90-1.1%, Cr: 1.4-1.6%, Mn: 0.30-0.60%, Si: 0.20-0.30%, Al: 0.008-0.030%, Ce: 0.004-0.010%, La: 0.002-0.006%, Ti<0.0015%, N<0.005%, S<0.010%, P<0.015%, with the balance being Fe and other inevitable impurities.

9. The method for manufacturing bearing steel according to claim 1, wherein the bearing steel comprises inclusions, wherein 95% or more of the inclusions are fine inclusions having a rare earth oxide content exceeding 60% and a size of less than 10 µm, and a remainder are composite inclusions of rare earth oxide-alumina-calcia-silica, wherein the composite inclusions have a size of less than 15 µm.

10. The method for manufacturing bearing steel according to claim 1, wherein the bearing steel has a contact fatigue life L₁₀ at 4.5 GPa of 5×10⁷ cycles or more.

11. A bearing steel manufactured by the method for manufacturing bearing steel according to any one of claims 1-10, comprising the following chemical components in percentage by mass: C: 0.9-1.1%, Cr: 1.4-1.6%, Mn: 0.3-0.6%, Si: 0.2-0.3%, Al: 0.008-0.03%, Ce: 0.004-0.01%, La: 0.002-0.006%, Ti<0.0015%, N<0.005%, S<0.01%, P<0.015%, with the balance being Fe and other inevitable impurities.

12. A mold flux used in the method for manufacturing bearing steel according to any one of claims 1-10, comprising the following components in percentage by mass: CaF₂: 40-65%, Al₂O₃: 5-10%, ZrO₂: 10-15%, CaO: 5-10%, MgO: 2-5%, SiO₂: 3-5%, Ce₂O₃+La₂O₃: 10-15%.

13. A mold flux used in the method for manufacturing bearing steel according to any one of claims 1-10, consisting of the following components in percentage by mass: CaF₂: 40-65%, Al₂O₃: 5-10%, ZrO₂: 10-15%, CaO: 5-10%, MgO: 2-5%, SiO₂: 3-5%, Ce₂O₃+La₂O₃: 10-15%.
